# EUROPEAN PATENT SPECIFICATION

(11) **EP 1 851 476 B1**
(45) Date of publication and mention of the grant of the patent: **04.03.2009**
(21) Application number: 05717775.0
(22) Date of filing: 25.02.2005
(51) Int. Cl.: F16L 47/03, B29C 65/02

(54) **METHOD FOR JOINING MULTI-LAYERED PIPE**
VERFAHREN ZUR VERBINDUNG EINES MEHRLAGIGEN ROHRS
PROCEDE DE RACCORDEMENT D'UN TUYAU MULTICOUCHE

(43) Date of publication of application: 07.11.2007
(73) Proprietor: Glynwed Pipe Systems Limited, Kent, TN13 1SD (GB)
(72) Inventor: ROBERTS-MOORE, Paul, Clive, Norton Canes, Staffordshire WS11 9XT (GB); BULL, Michael, Durapipe UK, Norton Canes,, Staffordshire WS11 9NS (GB)
(74) Representative: Townsend, Victoria Jayne
(86) International application number: PCT/GB2005/000682
(87) International publication number: WO 2006/090092

(56) References cited:
- WO-A-97/27418
- DE-A1- 4 444 914
- GB-A- 2 314 597
- GB-A- 2 318 543
- US-A- 5 352 871
- US-A- 5 786 575
- US-B1- 6 293 311

## Description

This invention relates to the joining of multi-layered pipes (see, for example, US 6,293,311 B1, corresponding to the preamble of claim 1).

The use of coaxial multi-layered pipes is well known. Such pipes are commonly used to simultaneously employ desirable properties of two or more materials in a given application. For example, in order to convey a corrosive chemical, a pipe construction material to be in contact with the chemical would need to be resistant to that chemical, however, the chemical-resistant material may not have sufficient mechanical strength to contain the fluid pressure needed to convey the chemical along the pipe. This problem is addressed by introducing a second layer of pipe construction material separated from the chemical by the first, chemical-resistant layer. The second layer need not be resistant to the chemical but is selected to have the mechanical properties needed to contain the chemical as it is conveyed through the pipe line. In the foregoing example, the first (or inner, chemical-resistant) layer may be a polymer and the second (or outer, mechanically reinforcing) layer, a metal, although other combinations of materials are also possible. A pipe may be referred to as a "metal dominant" pipe because the metal layer influences the mechanical properties of the pipe. However, such a pipe is a "metal dominant" plastic pipe.

Often, due to the very different chemical nature of adjacent layers in a multi-layer pipe, the layers of the pipe cannot be bonded together. In such a situation, a third or tie layer is introduced between the first and second layer, the tie layer having chemical properties which enable it to be bonded directly with each of the adjacent layers.

It will be understood that multiple additional layers optionally interspersed with additional tie layers may be included in a multi-layer pipe as previously described.

It will be appreciated that, particularly in hostile environments, there is a high potential for delamination of the multi-layered pipes.

Conventionally, multi-layer pipes of the type previously described are connected by means of mechanical fittings. These mechanical fittings are typically configured to retain the layers of the pipe in compression with each other and so prevent delamination of the pipe. Such fittings may comprise a "push-fit" annulus for receiving the pipe or a crimping mechanism for crimping the pipe ends.

It is known to connect single layer plastic pipes using thermal fusion couplings. The latter include a coiled length of metal which is bedded into the coupling during manufacture. The coupling is then fitted around a pipe and an electrical current is passed through the metal coil. The heat produced by the electrical current causes local melting and fusion of the coupling to the outer surface of the pipe. Electrical current may be passed directly through the coil (this is known as electro-fusion) or may be induced into the coil by means of a second coil positioned around the first, the second coil carrying an alternating electrical current (this is known as fusion by induction heating). It will be appreciated that different coil configurations may be more suited to one of electro-fusion or induction heating than the other.

The use of conventional thermal fusion coupling techniques in multi-layer pipes has been considered but is disadvantageous as these techniques serve only to join couplings to the outer layer of the multi-layered pipes providing no means for preventing delamination of the pipes. Furthermore, these couplings require a relatively complex, multi-stage construction rendering them slow and expensive to manufacture.

Electro-fusion coupling has been used in relation to "plastic dominant" multi-layered pipes. The properties of such a plastic dominant pipe are determined by the plastic layers of the pipe. The plastic dominant multi-layered pipe typically comprises a thick inner layer of plastics material covered by a thin foil of metal which is in turn coated with a thin, outer layer of plastic material. The thinness of the outer layer and inclusion of the metal layer renders it difficult to achieve good fusion between the pipe and the coupling. The problem is addressed by removing the outer plastic and metal foil layer and attaching the coupling directly to the inner, thicker plastic pipe. Although such an arrangement does partially protect the pipe end from delamination by preventing exposure to pipe contents, it is only suitable for plastic dominant composite pipes where the metal layer is close to the outer surface of the pipe. Furthermore, the arrangement does not protect against exposure to the external environment which may be as damaging to the unprotected pipe end as the pipe contents.

The present invention aims to provide more cost effective, alternative methods for joining multi-layered pipes and to reduce the incidence of delamination in pipes after coupling.

In accordance with the present invention there is provided a method for joining a multi-layered plastic pipe to a coupling, the multi-layered pipe including at least an outer and an inner layer of thermoplastic material and a core layer of metal or other conductive material which is less than 2mm thick and the pipe having an outside diameter of from 20mm to 110mm, the coupling comprising a unitary piece of thermoplastic material, the method comprising;
providing a coupling including a recess for receiving an end of the multi-layered pipe, the recess being configured, in use, to permit the coupling to contact the inner and outermost layers of the multi-layered pipe received in the recess;
fitting an end of the multi-layered pipe into the recess of the coupling;
introducing heat to both the coupling and either the inner layer alone or both the inner and outer layers of the multi-layered pipe sufficient to cause local melting at the interface between the coupling and either the inner layer alone or both the inner and outermost layers, characterised by the fact that introducing heat involves encircling the assembled pipe end and coupling with an electrically conductive coil; and further characterised by passing an alternating current through the electrically conductive coil sufficient to cause mutual induction in the core layer of the multi-layered pipe.

Further method steps and features of the invention are disclosed in the dependent method claims. The invention also discloses a combination according to product claim 34, further features of which are disclosed in the dependent product claims.

It will be appreciated that, by using a coupling which interfaces with both the inner and outermost layers of the pipe, the ends of all layers of the pipe can be sealed within the pipe-coupling join. It is recognised though that for certain sizes and sections of pipe it may only be possible to weld/fuse to the inner pipe layer. This is considered acceptable as the coupling still provides protection of the pipe end from exposure to both the pipes contents and external environment, and the single weld is of sufficient mechanical strength to contain the pipe contents.

Although the pipe comprises a core layer of metal or other conductive material it will be understood that the present invention relates to a plastic composite pipe.

Optionally the inner and/or outermost layers of the pipe comprise ethylene/octane copolymers known as polyethylene of raised temperature performance ("PE-RT"). Such polymers are chosen to operate over a wide range of temperatures from sub-zero to elevated temperatures thus enabling a single system to be adaptable to a number of applications. These polymers do not require any subsequent curing process thus overcoming any cross linking/curing issues associated with cross linked polyethylene and readily lend themselves to thermal jointing techniques. Alternative materials for the innermost and outermost layers include but are not strictly limited to; MDPE, HDPE and PP. The innermost and outermost layers may comprise the same or different materials.

Desirably, the outermost layer has a thickness in the range from 0.5 mm to 1.5mm for said pipes with outside diameters of 20mm to 110mm. The inner layer desirably has a thickness of from 0.75 mm to 5.0 mm for said pipes with outside diameters of 20mm to 110mm.

It is to be understood that the lower thicknesses in these ranges relate to layers used with pipes of smaller outer diameter and the upper thicknesses in these ranges relate to layers used with pipes of greater outer diameter.

For optimum joining conditions the thickness of the outermost layer is kept to a minimum.

Preferably, the conductive layer of the multi-layered pipe is positioned nearer to the outermost layer than to the inner layer.

The optimum-coupling ratio occurs when the outermost layer is thinner than the inner layer whereby the efficiency of the joining method is improved due to secondary currents induced in the conductive layer from a work coil. The direction of heat flow is directed to the inner pipe layer by a thinner outermost layer because air is a better insulator than the thermoplastic outermost layer. Directing heat towards the inner layer, which is the primary joining layer, reduces power requirements and joining cycle times.

The recess of the coupling is desirably an annular recess defined by an outer and an inner wall (or spigot). The inner wall desirably has a thickness of from 1.5mm to 10.0mm for use with pipes of outside diameters of 20mm to 110mm. Such sections are sufficient to prevent deformation, buckling or collapse during the welding/fusion process as well as providing the required level of pressure resistance should the pipe end not be fully inserted into the annular recess. By providing an innermost wall of the coupling that is of minimum thickness, heat flow from the conductive layer to the primary joining surface of the multi-layered pipe (the outer thermoplastic layer) is increased.

Preferably, the thickness of an outermost wall of the coupling is from 2.0 mm to 5.0 mm for use with said pipes of outside diameters of 20mm to 110mm. By providing an outermost wall of the coupling that is of minimum thickness, the coupling allows the work coil to be closer to the conductive layer of the multi-layered pipe such that the coupling ratio is improved.

It is to be understood that the lower thickness in these ranges relates to pipes of smaller outer diameter and the upper thickness in these ranges relates to pipes of greater outer diameter.

The coupling optionally comprises the same material as is used for one or both of the innermost and outermost layers of the pipe, though this is not essential. Whether or not the same material, the material of the coupling is selected to be compatible with the materials of the innermost and outermost layers in the sense that it will fuse with them under appropriate conditions of temperature and pressure.

Various methods may be used to introduce heat to both the coupling and the inner and outer layers of the multi-layered pipe. According to the invention, as defined in method claim 1 heat is introduced by electromagnetic induction. The coupling with the pipe end received in the recess is surrounded by an electrically conducting coil. An alternating electrical current is passed through the coil. The passage of the current through the coil induces a current in the conducting layer of the pipe. This current causes local heating sufficient to melt the surrounding thermoplastic layers of the pipe and the thermoplastic of the coupling, thus the pipe and coupling become thermally bonded.

Preferably the thickness of the conductive layer is from 0.2 mm to 1.2 mm, wherein a thinner conductive layer is used with a pipe of smaller outer diameter and a thicker conductive layer is used with a pipe of greater outer diameter.

It is advantageous for the inner thermoplastic layer to reach a higher temperature than the outer thermoplastic layer as quickly as possible. When the conductive layer is a poor conductor of heat a conductive layer of reduced thickness increases the heating efficiency of the method. Also, a thin conductive layer is easier to form from a sheet into a pipe.

Preferably, the combined thickness of the outer and inner thermoplastic layers is greater than the thickness of the core conductive layer.

Optionally, where this method is to be used, the core layer of the pipe comprises aluminium.

Preferably, the core layer comprises a ferromagnetic material such as magnetic stainless steel. The magnetic stainless steel layer is not limited to any specific type or grade of stainless steel but can comprise martenistic stainless steel, ferritic stainless steel, Duplex or Super Duplex stainless steel.

Magnetic stainless steel is advantageous in that the induction heating of such materials is more efficient than for most non-ferromagnetic materials, thus less power is required to cause local melting of the pipe and coupling. Typically, the electrical load in a work coil required to cause local melting of a pipe and coupling when the core layer of the pipe comprises aluminium is 500A. Typically, when the core layer comprises stainless steel the electrical load is reduced to 100A. The improved efficiency reduces energy requirements because higher conductive layer temperatures are reached more quickly with an associated reduction in power requirements and weld cycles.

The reduced power requirements for a pipe comprising a stainless steel core layer allow for the use of a smaller, lighter and less expensive induction power supply. Alternatively, a similar rated power supply unit is capable of performing multiple, simultaneous joinings or joining pipes of greater outside diameter. The current required in the work coil is consequently reduced and design options for the work coil are increased. For example, permitting more portable and lower cost induction welding units to be used. Fewer electrical contacts would be required within a specifically designed work coil to cope with a reduced work coil current, which is advantageous when locating contacts in the limited work space of a coil and housing.

Preferably, where the conductive layer comprises stainless steel the thickness of the conductive layer is from 0.2 mm to 0.8 mm.

Using known solid state induction techniques, the heating parameters for the method such as, cycle time, current frequency and power input can be accurately controlled allowing a high degree of repeatability contributing to consistency of joint integrity and a reduction in rejects.

Where the core layer comprises aluminium or magnetic stainless steel, using a pre-programmable variable power input, the aluminium or magnetic stainless steel interface temperature is desirably maintained at between about 200°C and 260°C. The amount of energy needed to achieve the temperatures can be determined from the power applied to the electrically conducting coil, the surface area of aluminium or magnetic stainless steel, in the core layer to be heated, and the weld cycle time.

The weld cycle time is desirably in the region 10s to 300s depending upon pipe diameter, around 10s for the smallest diameters and 300s for largest.

Where the core layer comprises aluminium or magnetic stainless steel, the operating frequency of the electrically conducting (work) coil is desirably between about 40kHz and 60kHz again depending on pipe diameter. It will be appreciated that the optimal operating frequency used will differ for different metallic materials. The frequency chosen reflects the inherent characteristics of the materials structure and is influenced by the materials inherent conductivity and resistivity and whether or not the material is magnetic. Determination of an appropriate frequency for a pipe and coupling of given structure is assumed to be well within the capabilities of the skilled reader.

The work coil is supplied with an alternating current and corresponding voltage by induction welding equipment. The induction welding equipment typically comprises of an induction power supply unit, connected to a remote output circuit by an inter-connecting power lead. The work coil connects directly to the remote output circuit. The alternating current in the work coil induces a magnetic field that surrounds the work coil and any object, in this case the metal layer within the pipe, that is located within the work coil. The magnetic field sets up secondary eddy currents in the metal layer of the pipe which, through resistive effects, cause the metal to heat.

The induction welding equipment is desirably of a design which is portable and lightweight. In one embodiment, this is achieved by designing the internal electronic circuitry to operate from a 110V AC power input such that the need for any internal voltage transformer as used in conventional induction welding equipment is removed. (It will be appreciated that the transformer is the heaviest item within a conventional induction welding power supply unit.) The supply voltage is transformed using industry standard portable transformers, for example of the type commonly used in the construction industry. The resistive characteristics of the internal electronic components of the induction power supply unit are selected to minimize the heat generated by the components and the consequent amount of cooling required. Whilst, in conventional systems, water cooling of the induction power supply unit is necessary to remove the excess heat, in the present embodiment, cooling is achieved through strategic, direct assembly of the internal electronic circuitry onto a lightweight aluminium finned heat sink which also forms an integral part of the superstructure of the induction welding power supply unit. As a result of the novel design described, the weight of the induction welding power supply unit is typically no greater than 15kg compared to from 35 to 50kg for conventional equipment having the same maximum power rating. The inter-connecting power leads of the novel equipment enable an operator to perform a number of welds at a distance from the induction welding power supply unit. This significantly reduces the effort required by the operator in carrying equipment throughout an installation and increases mobility. The length of the inter-connecting power lead is typically 3-5m. It is necessary to compensate for the power losses along the inter-connecting power lead with the use of a specially designed remote output circuit box. This is air-cooled and typically weighs 1-3kg and is considerably smaller than the induction welding power supply unit.

Conveniently, the electrically conducting coil can be provided in the form of a flexible wire which can be coiled around the pipe in an appropriate configuration to provide the desired heating effect. The efficiency of the heating process may be enhanced through the use of a special construction of wire, commonly referred to as litz wire. The wire is constructed from a number of individually insulated copper wires that are twisted or braided together. The construction of the wire reduces eddy current losses and skin effect problems to the extent that efficiencies are increased. A more efficient work coil allows for shorter joining cycle times and reduces power requirements. The litz wire is also advantageous because heat build up is minimised. This enables the work coil to operate without water cooling which is a normal requirement for standard copper work coils. The fact that the coil is capable of maintaining a safe working temperature, without the use of an artificial cooling media, is advantageous because an installer does not require the use of a water supply which can be difficult to source on a new build installation. It will be appreciated that the optimum configuration for the coil can be determined from the coupling ratio of the coil to the pipe (i.e. the inner diameter of the coil and the outer diameter of the metal layer of the work piece) from the parameters of the electrical supply to be provided to the coil and the heating characteristics of the core metal layer.

Preferably, the work coil has between 3 and 6 full turns.

The number of turns of the work coil is selected according to the frequency of the power output and the outer diameter of the pipe or fitting that is to be joined.

Preferably, an inter-changeable Remote Output Circuit (ROC) is used to connect the work coil to the power supply units.

An ROC allows for correction of the work coil to optimise its efficiency.

Accurate positioning of the flexible coil may be achieved by providing a two part cylinder which is sized to clamp around the pipe and fitting. The two parts of the cylinder may be hingedly connected or may be fastenable together by any conventional, mechanical means. One or more guides may be provided in or on the outer surface of the cylinder to receive the wire and hold it in an appropriate configuration. For example, a guide may be provided in the form of a helical groove machined into the outer surface of the cylinder at an appropriate depth and with an appropriate pitch for receiving the flexible wire. Whilst a helical configuration is convenient, it will be appreciated it is not essential. Once the wire is held in place in the guide or guides, it is desirably clamped in place by a restraining device, optionally in the form of a second cylindrical clamp.

Other suitable restraining devices include but are not strictly limited to a strap or a clip.

Preferably, the coil contains electrical contacts to connect the work coil which in combination are able to carry the electrical current load of the work coil.

The cylinder comprises a material which has a relatively low heat conductivity, which is not inductive and which is not compatible (i.e. it will not fuse) with the materials of the coupling and pipe under the conditions applied for fusing the coupling to the pipe. For example, the material of the cylinder may have a melting point which is significantly higher than that of the coupling/pipe. Optionally, the cylinder may be coated with a material which is incompatible with those of the coupling/pipe, its body comprising a different material. The incompatible material of the cylinder or its coating may, optionally, comprise a crystalline engineering thermoplastic material for example nylon or acetal.

It will be appreciated that the flexible wire when combined with a variety of differently sized, helically grooved cylindrical clamps, is adaptable for use with pipes in a wide range of diameters (e.g. from 20-110mm according to the present invention).

As an alternative to the flexible coil, a cylinder clamp similar to that already described may be provided with an integral coil. This does not necessarily need to be a helical coil - other configurations may be used. The coil is moulded or bonded into position in the cylinder which is designed in such a manner that it may be placed around the pipe/fitting joint, for example it may consist of two half shells, which may be connected via a hinge or other similar device, which allows continuation of the coil wire from one half shell to another. When the cylinder is reformed (i.e the two parts are closed or fastened together), the corresponding pieces of coil are matched up thereby reforming the coil. Optionally, in this arrangement, the ends of the coil may be terminated in a specific manner so as to ensure intimate contact of the ends of the coil when it is reformed.

Heat generation by mutual induction is time and energy efficient, thus joining costs and process times can be minimised. The process is clean and non polluting, producing no harmful emissions, noise or waste heat which may significantly affect the surrounding environment and as such is safe and not unpleasant for installers to use.

It will be appreciated that other means could be used to create heat in a metallic or other conductive layer which could, in turn, conduct heat to surrounding thermoplastic layers and a coupling. For example, current may be applied directly to the metal or conductive layer. The metal layer may also be employed to conduct heat from another heat source and to the thermoplastic layers and coupling. Other heating means and methods will no doubt occur to the skilled addressee without departing from the scope of the invention as defined by the appended claims.

In another alternative suitable for use in pipes with or without a metallic/conductive middle layer, the coupling and inner and outermost layers of the pipe may be heated using socket fusion. Using heating tools shaped to complement the cross section of the coupling and the pipe end, the tools are placed into the recess of the coupling and over the ends of the pipe extending some way along the exposed surfaces of the inner and outermost pipe layers.

Heat is applied to the tools which in turn heat by conduction, the section of the coupling defining the recess, and the exposed surfaces of the pipe. Heat may be applied to the heating tools when in situ or prior to application to the coupling and pipe end. Once local melting of the coupling and pipe begins to occur, the heating tools are removed and the pipe end is inserted into the recess of the coupling. In this alternative, the recess of the coupling is desirably sized to close tolerances to ensure an interference fit of the pipe end in the recess. This ensures a joint pressure sufficient to bond the pipe end with the coupling when inserted.

Any known method can be used to heat the heating tools, for example (but not strictly limited to); resistance heating, heating by conduction and heating by induction.

Heating parameters for heating the tools such as heat soak time and temperature can be accurately controlled allowing a high degree of repeatability of the method contributing to consistency of joint integrity and a reduction in joint rejection.

In common with the first embodiment, this process is clean and non polluting, producing no harmful emissions, noise or waste heat which may significantly affect the surrounding environment and as such is safe and not unpleasant for installers to use.

In further embodiments of the invention, pipes of multi-layer construction can be joined using fittings of the design as previously described and any method which creates sufficient heat to melt exposed thermoplastic surfaces of the pipes and fittings which, when placed in contact with each other fuse to form a joint which encloses and protects the pipe end. Such methods already known in field of pipe joining include (but are not strictly limited to) ultrasonic and spin welding.

The method of the invention provides a homogenous weld about the pipe end enclosing the ends of each of the layers of the pipe and which is less susceptive to thermal effects such as shrinkage or expansion often encountered in the use of mechanical fittings and which can ultimately result in leakage of materials carried in the pipe. As the bore of the pipe is included in the seal and the pipe end face isolated from internal fluid pressures of fluids conveyed through the pipe, the incidence of pipe end delamination is, consequently, eliminated. Enclosing of the pipe ends and in particular, the end of the metal layer also serves to prevent contamination of the contents of the pipe which might occur were the metal layer exposed to contents and to corrode and breakaway or dissolve in solution in the pipe contents.

Optionally, the cross-section of the coupling defining the recess may be U-shaped, J-shaped or L-shaped.

The flow of heat when using a J-shaped or L-shaped coupling is improved because the material from which the coupling is made has greater thermal conductivity than air. The shape of the coupling allows more heat to flow to the multi-layered pipe within the coupling.

The coupling configurations ensure that the bore of the pipe is always included in the seal and assists in the elimination of pipe end delamination. It is to be understood that the term coupling as stated herein is intended to include pipe end fittings for closing the ends of pipes as well as fittings for joining pipes together. The method has application in joining of pipes to couplings of all types including but not strictly limited to; T-junctions, elbows, 45° elbows, cross pieces and Y-pieces. The couplings are conveniently provided with annular recesses in their open ends configured to receive the ends of pipes to be joined.

The resulting joint is considerably more leak proof than joints provided by mechanical methods such as mechanical crimping.

To assist the reader in understanding the invention, there follows a description of some embodiments of pipes and couplings to which the invention may be applied and of apparatus which may be used to perform the invention.

The following Figures are referred to in the discussion which follows:
Figure 1 illustrates an axial cross section through a multi-layered pipe to which the present invention may usefully be applied;
Figure 2 illustrates the principle of mutual induction as it occurs in a metallic tube surrounded by an induction coil having a current passed through it.
Figure 3 illustrates a pipe and coupling being joined in accordance with the method of the invention.
Figure 4 illustrates a variety of configurations of pipe coupling in accordance with the invention.
Figure 5 illustrates schematically a first coil and clamp arrangement which may be used in embodiments of the invention where heat is generated through electromagnetic induction of the core layer.
Figure 6 illustrates schematically a second coil and clamp arrangement which may be used in embodiments of the invention where heat is generated through electromagnetic induction of the core layer.
Figure 7 illustrates an induction welding system suitable for use in heating the core metal layer of Figures 1 and 2.
Figure 8 illustrates a set of heating tools suitable for use in implementing an embodiment of the methods of the invention.

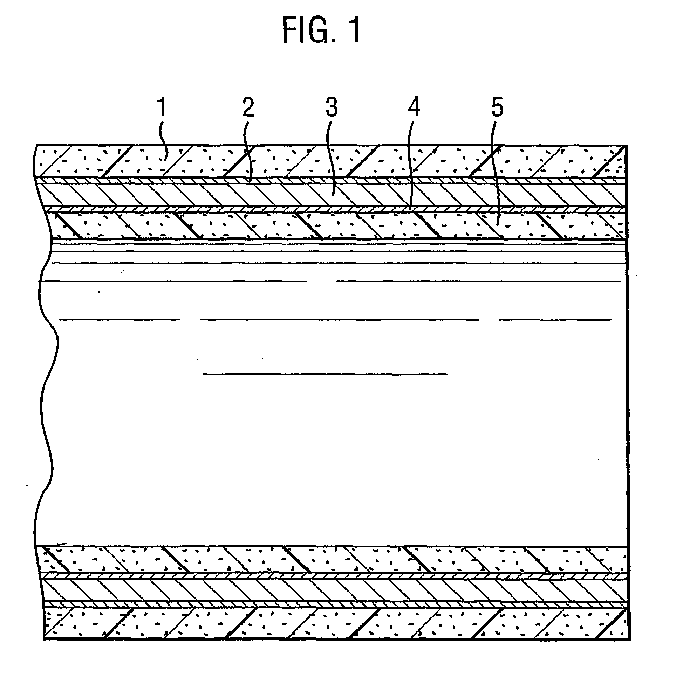

As can be seen from Figure 1, a multi-layered pipe to which the method of the invention may be applied comprises five coaxial layers; an outermost polymer layer 1, core metallic layer 3, and an innermost polymer layer 5; an outer tie layer 2 located between the outermost polymer layer 1 and the core metallic layer 3 and an inner tie layer 4 located between the core metallic layer 3 and the innermost polymer layer 5. The metallic layer 3 is shown to be positioned centrally within the multi-layered pipe but it is to be understood that the outermost polymer layer 1 may be thinner than the inner polymer layer 5 such that the conductive layer is positioned nearer to the outermost polymer layer 5.

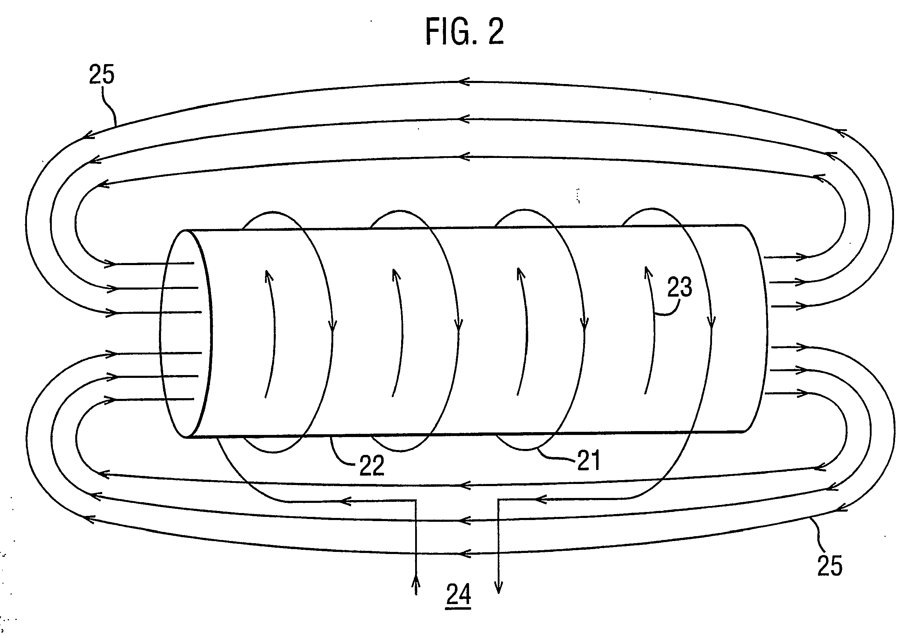

Figure 2 illustrates a primary induction coil 21 encircling a tubular metal core 22. A current is induced into the primary coil by a supply 24. A magnetic B-field 25 results from the current in the primary coil 21 which in turn induces in the tubular metal core a secondary current 23. It will be appreciated that due to resistance in the metal material of the tubular core 22, a heating effect will result from the secondary current 23.

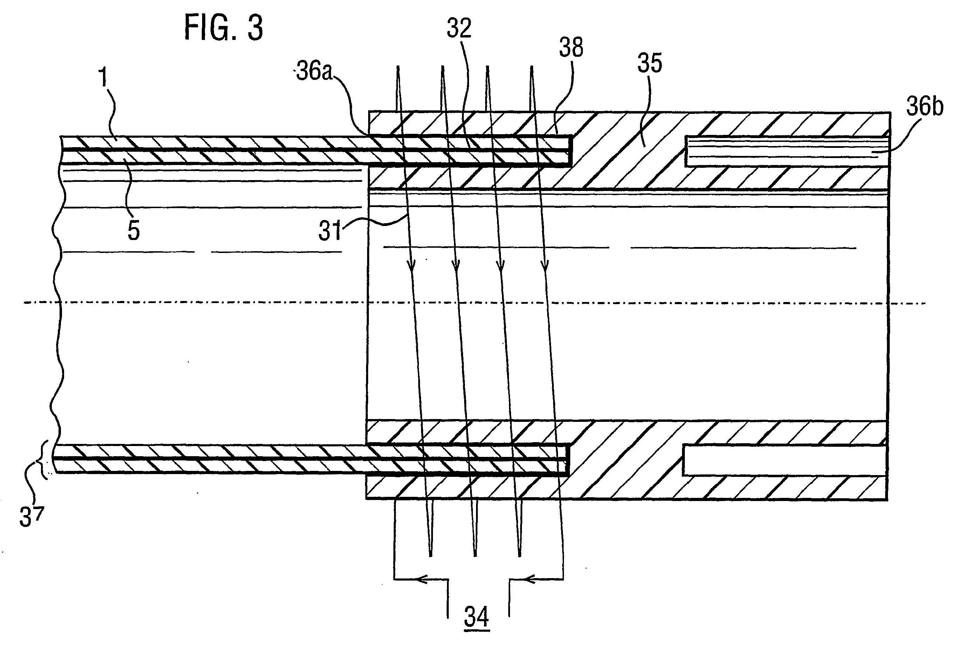

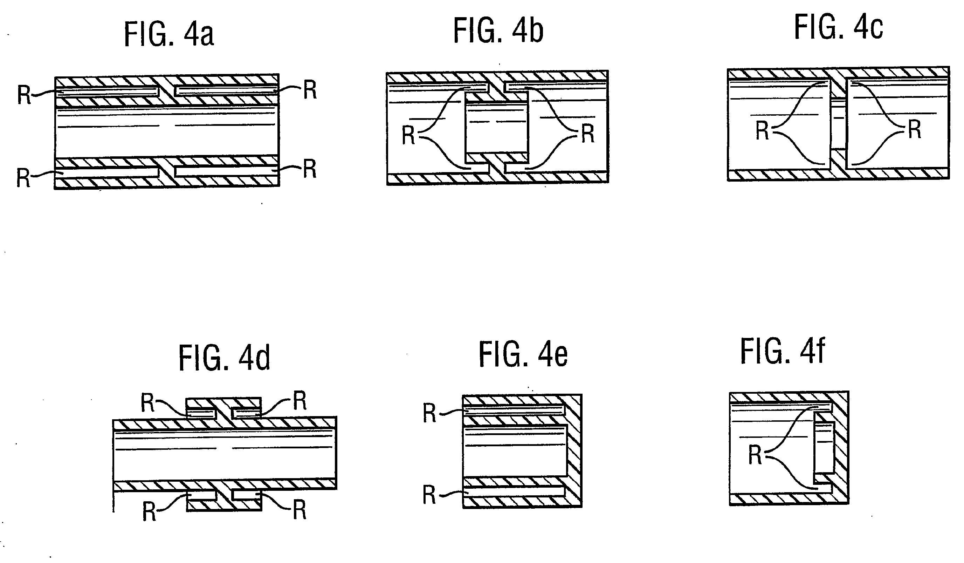

In the left hand side of Figure 3 there can be seen a multi-layered pipe of similar construction to that shown in Figure 1. To the centre and right of the Figure is shown a coupling 35 which essentially comprises a hollow tubular moulding of thermoplastic material having an annular slot 36a, 36b provided in each end. The multi-layered pipe 37 is slotted into the annular slot 36a. The assembled pipe and coupling are positioned inside a primary induction coil 31 provided with an alternating current by current supply 34. As a consequence of the current 34 in the primary coil 31, there is induced in a portion 32 of the core metallic layer 3 of the multi-layered pipe 37 a secondary current. The secondary current in turn produces local heating which leads to a region 38 of local melting of the coupling 35 and the innermost and outermost thermoplastic layers 1, 5 of the multi-layered pipe 37. The molten layers bond and on removal of the assembly from the primary coil, there is provided a fully bonded pipe-coupling join. The process can be repeated with a second pipe in the second annular slot 36b to provide a securely joined pipe. Figure 4 shows in longitudinal section a variety of pipe couplings in accordance with the invention. The couplings generally comprise a single unitary piece of hollow circular cross section. Figure 4a shows a two ended pipe coupling for joining a pair of pipes in parallel. In cross section, the shape of the coupling can be seen to comprise four "U"s arranged in two pairs, end to end. Each U shaped section defines part of an annular recess R for receiving an end of a pipe. The coupling of Figure 4b is broadly similar to that of Figure 4a but differs in that rather than U-shaped, the four sections are "J" shaped, thus the part of the coupling which sits adjacent the exposed surface of the innermost layer of an inserted pipe is shorter in length than that which sits adjacent the exposed surface of the outermost pipe. Figure 4c shows a further variation wherein the sections are essentially "L" shaped. The short end of the L is of sufficient length to extend across the end surfaces of each layer of the pipe but does not extend into the bore of the pipe when the pipe is inserted.

Figure 4d illustrates an arrangement similar to that of Figure 4b, however, in this embodiment, the longer part of the J sits adjacent the exposed surface of the innermost layer of the pipe when the pipe is inserted. Figures 4e and 4f illustrate pipe end caps corresponding to the couplings of Figure 4a and Figure 4b. It will be appreciated that the couplings may take other forms, for example, elbow joints, T-joints and Y-joints. Couplings of the invention are characterised by their unitary nature and the provision of a recess which accommodates the ends of both the inner and outermost layers of a multi-layered pipe.

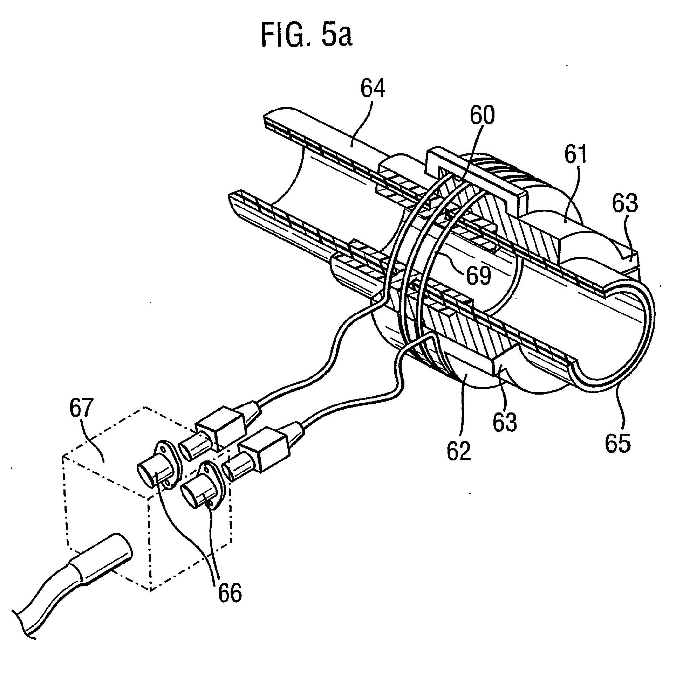

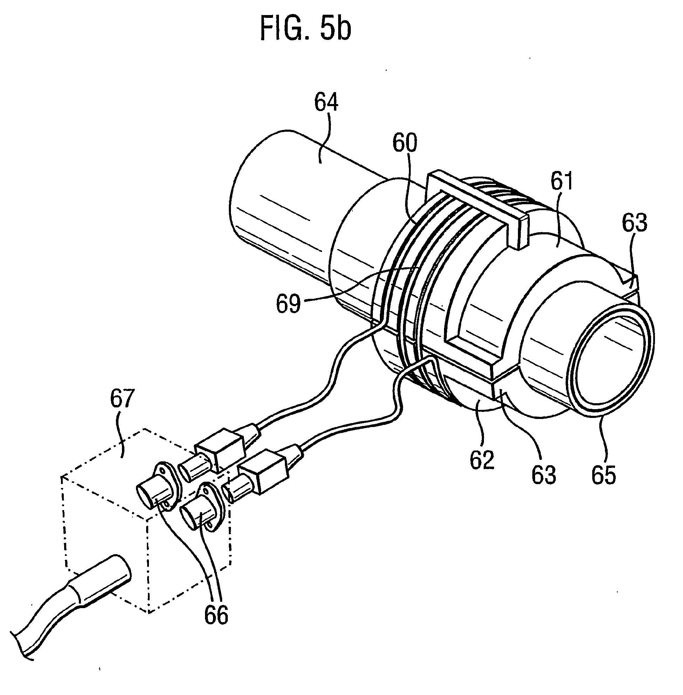

As can be seen in Figure 5 there is provided a substantially cylindrical clamp comprising an upper 61 and a lower 62 part each having a lipped portion 63 extending radially outwardly and longitudinally of the cylinder parts 61, 62. Two opposing lipped portions 63 of the respective cylinder parts 61, 62 may, optionally, be hinged together. As an alternative to hinging, the respective lip portions may be joined together by mechanical means, for example by bolts or clips (not shown).

The two parts are joined so as to enclose two pipe ends 64, 65 which in turn are connected by a thermoplastic coupling (not shown). With the two parts 61, 62 joined together, a flexible wire 69 is coiled around the outer surface of the closed clamp and is received in a helical groove 60 provided in the outer surface of the clamp.

The ends of the wire 69 are provided with terminals 66 which, in turn, can be plugged into sockets of a remote output circuit 67.

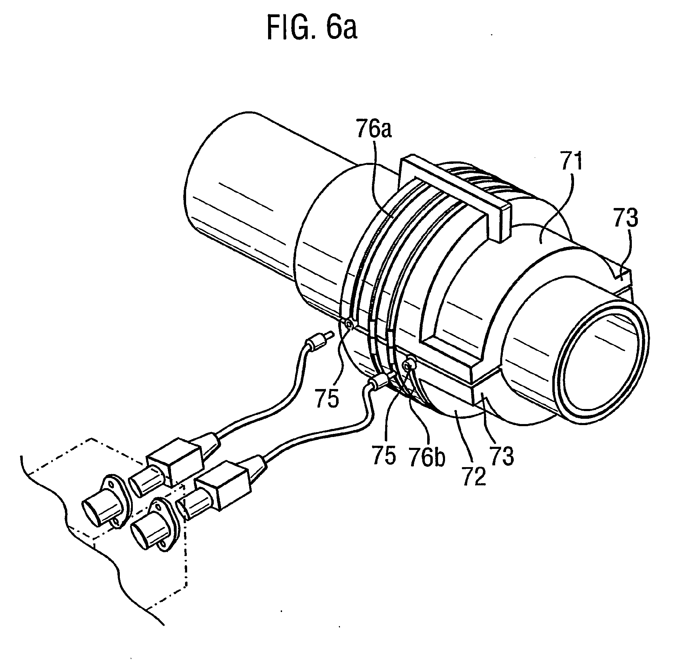

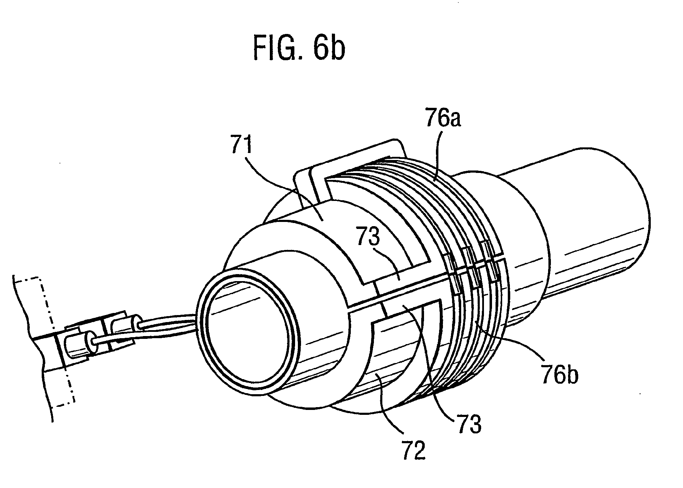

In Figure 6 two cylinder parts 71, 72 are again provided, each with a lipped portion 73 extending radially outwardly and longitudinally of the cylinder. The arrangement differs from that of Figure 6 in that each cylinder part 71, 72 has integrally formed therein half of a coil 76a, 76b. When the two parts are properly aligned, the two half coils engage together to form an induction (work) coil. The work coil is provided with two end terminals 75 which can be connected to a remote output circuit 67 using similar end terminals 66 as shown in Figure 5.

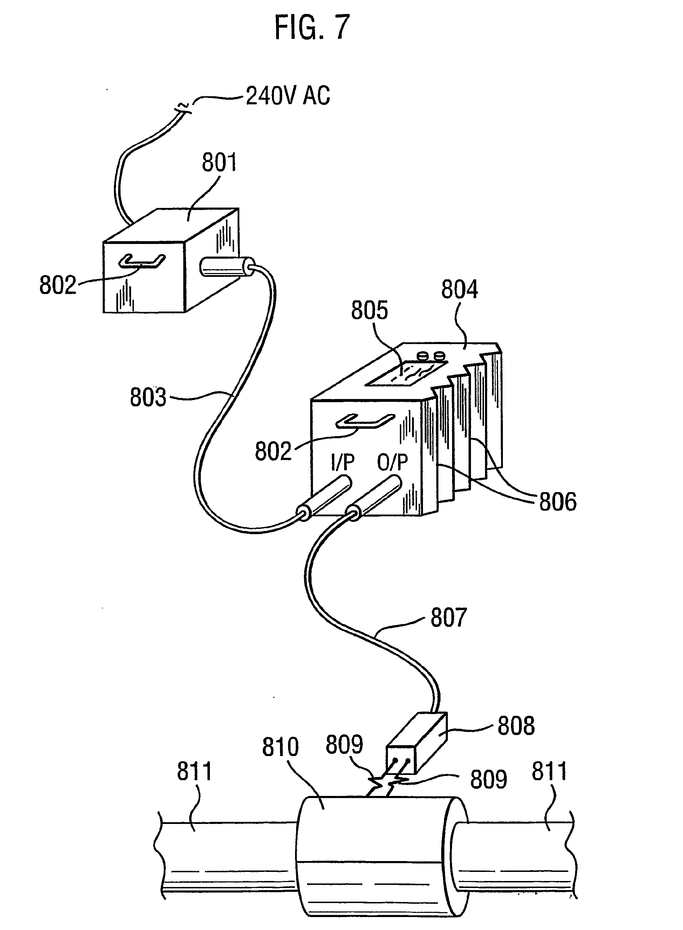

Figure 7 shows schematically an embodiment of induction welding equipment specifically designed for use in the field.. As can be seen, the induction welding equipment, in use, is connected to a standard 240/110V transformer 801 which receives an input from a 240V AC power supply. The transformer 801 is embodied in a box having a total approximate weight of around 12kg. The box is provided with one or more handles 802 for easy carriage by an operator.

A cable 803 capable of delivering 110V is provided between the transformer 801 and a portable power induction power supply unit 804. The 110V AC power supply is received as an input to the induction power supply unit 804 via cable 803. The induction power supply unit 804 is embodied in a lightweight box and has an approximate total weight of 15kg. On a top surface of the box is an operator interface panel 805 by means of which an operator can select the appropriate welding conditions, that have been predetermined to affect the optimum power output and cycle time from the induction power supply unit to the work coil that surrounds the pipe and fitting to be welded. One or more sides of the supply unit 804 comprise a number of conductive fins 806 (for example, aluminium) which act as a heat sink dispersing heat generated internally of the induction power supply unit. The induction power supply unit 804 is also provided with one or more carrying handles 802.

Once the desired characteristics of the output supply voltage have been selected by the operator, the output supply voltage directed to the work coil via an interconnecting lead 807 from the induction power supply unit 804 to a remote output circuit box 808 (approximate weight 1-3kg). The interconnecting lead 807 is designedly long (for example about 3-5 meters). The remote output circuit box 808 includes circuitry to compensate for losses or distortions on the characteristics of the selected output supply voltage incurred in transmission through the interconnecting lead 807. The approximate weight of the remote output circuit is 1-3kg.

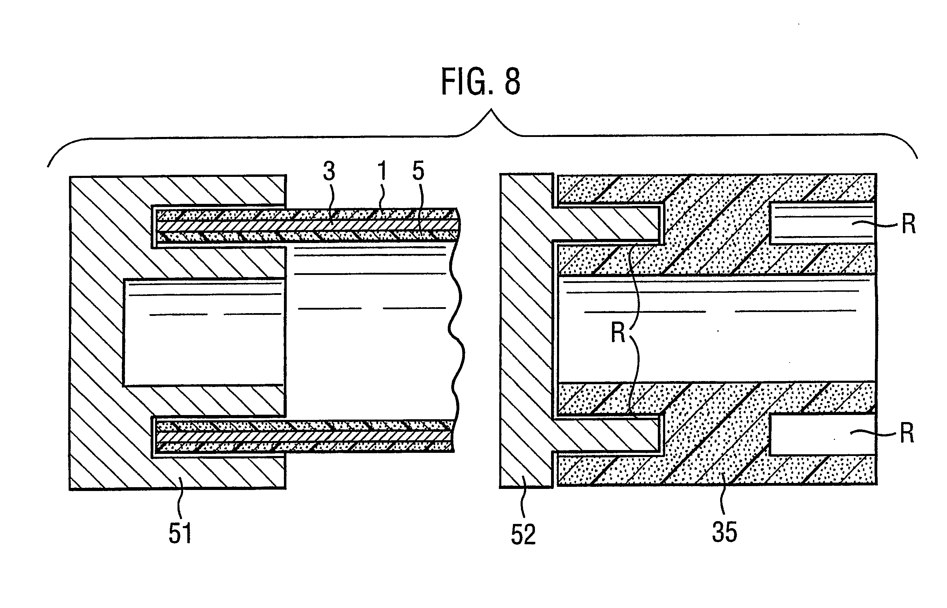

As can be seen from Figure 8, heating tools for use in the socket fusion embodiment of the invention are provided in a complementary pair, one (Figure 8a) configured for receiving an end of a pipe and the other (Figure 8b) configured for inserting into the recess of an end of a coupling. The tools typically comprise a metal with a melting point significantly higher than that of the thermoplastic of the pipe or coupling.

## Claims

1. A method for joining a multi-layered plastic pipe (37) to a coupling (35), the multi-layered pipe including at least an outer (1) and an inner (5) layer of thermoplastic material and a core layer (3) of metal or other conductive material which is less than 2mm thick and the pipe having an outside diameter of from 20mm to 110mm, the coupling (35) comprising a unitary piece of thermoplastic material and the coupling (35) comprising a thermoplastic material, the method comprising;
providing a coupling (35) including a recess (R) for receiving an end of a multi-layered pipe (37), the recess R being configured, in use, to permit the coupling to contact the inner (5) and outermost (1) layers of a multi-layered pipe (37) received in the recess (R);
fitting an end of the multi-layered pipe (37) into the recess (R) of the coupling (35);
introducing heat to both the coupling (35) and either the inner layer (5) alone or both the inner (5) and outer (1) layers of the multi-layered pipe (37) sufficient to cause local melting at the interface between the coupling (35) and either the inner layer (5) alone or both the inner (5) and outermost (1) layers, **characterised by** the fact that introducing heat involves encircling the assembled pipe end and coupling (35) with an electrically conductive coil (21); and further **characterised by** passing an alternating current through the electrically conductive coil (21) sufficient to cause mutual induction in the core layer (3) of the multi-layer pipe.

2. A method as claimed in any preceding claim **characterised in that** the inner and/or outermost layers (1,5) of the pipe (37) comprise a material selected from; polyethylene of raised temperature performance ("PE-RT") ethylene/octane copolymers, MDPE, HDPE or PP.

3. A method as claimed in claim 2 **characterised in that** the coupling (35) also comprises a material selected from; polyethylene raised temperature ("PE-RT") ethylene/octane copolymers, MDPE, HDPE or PP.

4. A method as claimed in any preceding claim **characterised in that** the outermost layer (1) has a thickness in the range from about 0.5mm-1.5mm.

5. A method as claimed in any preceding claim **characterised in that** the inner layer (5) has a thickness of from about 0.75mm to 5.0mm.

6. A method as claimed in any preceding claim **characterised in that** the layer (3) of metal or other conductive material is positioned nearer to the outermost layer (1) than to the inner layer (5).

7. A method as claimed in any preceding claim **characterised in that** the recess (R) of the coupling (35) is an annular recess defined by an outer and an inner wall and the inner wall has a thickness of from about 1.5mm to 10.0mm.

8. A method as claimed in claim 7 **characterised in that** the outer wall of the coupling (35) has a thickness of from about 2.0mm to about 5.0mm.

9. A method as claimed in any preceding claim **characterised in that** the layer (3) of metal or other conductive material has a thickness of from about 0.2mm to 1.2mm.

10. A method as claimed in any preceding claim **characterised in that** the combined thickness of the outermost (1) and inner (5) thermoplastic layer is greater than the core conductive layer (3).

11. A method as claimed in any preceding claim **characterised in that** the core layer (3) of the pipe comprises aluminium.

12. A method as claimed in claim 1 to 11 **characterised in that** the core layer (3) of the pipe comprises a ferromagnetic material such as magnetic stainless steel.

13. A method as claimed in claim 12 **characterised in that** the magnetic steel layer comprises martenistic stainless steel, ferritic stainless steel, Duplex stainless steel, or Super Duplex stainless steel.

14. A method as claimed in claim 12 or claim 13 **characterised in that** the layer (3) of magnetic stainless steel has a thickness of from about 0.2mm to 0.8mm.

15. A method as claimed in any preceding claim **characterised in that** the pipe includes one or more tie layers (2,4).

16. A method as claimed in any of claims 1 to 15 **characterised in that**, during the heating step, the aluminium interface or magnetic stainless steel temperature is maintained at between about 200°C and 260°C.

17. A method as claimed in any preceding claim **characterised in that** the electrical current is supplied for a period of from 10s to 300s.

18. A method as claimed in any preceding claim **characterised in that** the operating frequency of the electrically conducting coil is between about 40kHz and 60kHz.

19. A method as claimed in any preceding claim **characterised in that** the electricity is supplied to the main induction power supply unit at a nominal voltage ranging from 110V to 240V.

20. A method as claimed in any of claims 1 to 19 **characterised in that** the electrically conducting coil (69) is provided in the form of a flexible wire which is wound about a cylindrical clamp (61, 62), the cylindrical clamp having an inner diameter sized to receive the outside diameter of the pipe and the outside diameter of the fitting, being engaged around the outside diameter of the pipe (811) and the outside diameter of the fitting.

21. A method as claimed in claim 20 **characterised in that** one or more guides (60) is provided in or on the outer surface of the cylinder (61.62) and the flexible wire (69) is received and held in place in the guides in an appropriate configuration.

22. A method as claimed in claim 21 **characterised in that** the guide (6) is provided in the form of a helical groove machined into the outer surface of the cylinder (61.62) at an appropriate depth and with an appropriate pitch for receiving the flexible wire (69).

23. A method as claimed in claim 22 **characterised in that** there is further provided a restraining device for holding the coiled flexible wire in its coiled configuration.

24. A method as claimed in claim 23 **characterised in that** the restraining device is a second cylindrical clamp having an internal diameter configured for receiving the outer diameter of the helically grooved cylindrical clamp (61, 62).

25. A method as claimed in any of claims 1 to 19 **characterised in that** the electrically conducting coil is provided in the form of two coil parts (76a, 76b) integrally formed in two mating portions (71, 72) of a cylindrical clamp, the cylindrical clamp having an inner diameter sized to receive the outside diameter of the pipe and the outside diameter of the fitting, being engaged around the outside diameter of the pipe and the outside diameter of the fitting, the arrangement being such that when the two mating portions (71, 72) of the clamp are brought together, the two coil parts (76a, 76b) interconnect producing a single induction coil.

26. A method as claimed in claim 25 **characterised in that** the two mating portions (71, 72) are connected via a hinge which allows continuation of the coil wire from one mating portion (71, 72) to another (71, 72).

27. A method as claimed in claim 1 **characterised in that**, the step of heating involves applying current directly to the core layer (3).

28. A method as claimed in any preceding claim **characterised in that** the coupling (35) comprises a moulded piece of thermoplastic material having at least one open end and an annular recess (36a, 36b) provided in the at least one open end, the recess being configured for receiving the multi-layered pipe (37).

29. A method as claimed in claim 1 **characterised in that** the step of introducing heat involves providing heating tools (51, 52) shaped to complement the recess (R) of the coupling and the pipe end, placing the tools into the recess of the coupling and over the ends of the pipe extending some way along the exposed surfaces of the inner (5) and/or outer (1) pipe layers, and heating the heating tools (51,52), to a temperature at or above the melting temperature of the thermoplastic material of the inner and outer layers and the coupling.

30. A method as claimed in claim 29 **characterised in that** the heating tools (51, 52) are heated in situ.

31. A method as claimed in claim 29 **characterised in that** the heating tools (51, 52) are heated prior to contact with the coupling and pipe end.

32. A method as claimed in claim 1 **characterised in that** the step of introducing heat involves using a welding technique which melts the contacting thermoplastic surfaces of the multi-layered pipe and the coupling.

33. A method as claimed in claim 32 **characterised in that** the welding technique is selected from spin welding or ultrasonic welding.

34. A combination of one or more multi-layered pipes (37) and a coupling (35) joined according to the method of any preceding claim.

35. A combination as claimed in claim 34 wherein the coupling (35) has a plastic body of unitary configuration and including at least one annular recess (36a, 36b) configured for receiving a pipe end **characterised in that** the section of the coupling defining the recess has a J shaped cross section, when a pipe is received in the recess, the upright of the J sitting parallel to and in contact with an exposed surface of one of the inner and outer layers of the pipe and the hook of the J extending across an end of all the layers of the pipe and onto the exposed surface of the other of the inner and outer layers of the pipe.

36. A combination as claimed in claim 34 wherein the coupling (35) has a plastic body of unitary configuration and including at least one annular recess (36a, 36b) configured for receiving a pipe end **characterised in that** the section of the coupling defining the recess has an L shaped cross section, the upright of the L, when a pipe is received in the recess, sitting parallel to and in contact with an exposed surface of one of the inner and outer layers of the pipe and the horizontal of the L extending across an end of all the layers of the pipe.

37. A combination as claimed in any of claims 35 to 36 **characterised in that** the coupling is selected from; a T-junction, an elbow joint, a 45° elbow joint, a cross piece, a Y-piece or an end piece.

38. A method as claimed in any of claims 1 to 29 **characterised in that** an alternating current is provided to the electrically conductive coil (21) by means of induction welding equipment, the induction welding equipment comprising a transformer (801) connectable with an AC power supply as an input and configured to output a transformed supply via a power cable (803) to an induction welding power supply unit (804), the power supply unit including an operator panel (805) configured to permit the operator to select specific characteristics of the induction welding power supply unit and means (807, 808, 809) for outputting the alternating current and corresponding alternating voltage at the optimal frequency to the electrically conductive coil in order to heat the electrically conductive coil at the desired rate to the desired temperature.

39. A method as claimed in claim 38 **characterised in that** the supply with the selected characteristics is output via a remote output circuit box (808), the remote output circuit box being configured to compensate for any losses or distortions in the supply incurred during transmission of the supply to the coil.

## Patentansprüche

1. Verfahren zur Verbindung eines mehrlagigen Rohrs (37) aus Kunststoff an ein Anschlussstück (35), wobei das mehrlagige Rohr mindestens eine äußere Lage (1) und eine innere Lage (5) aus einem thermoplastischen Material und eine Kernlage (3) aus einem Metall oder einem anderen leitenden Material aufweist, die weniger als 2 mm dick ist, und wobei das Rohr einen äußeren Durchmesser von 20 mm bis 110 mm aufweist, wobei das Anschlussstück (35) ein einstückiges Teil aus einem thermoplastischen Material und das Anschlussstück (35) ein thermoplastisches Material umfasst, wobei das Verfahren umfasst:
ein Bereitstellen eines Anschlussstückes (35) mit einer Aussparung (R) zum Empfangen eines Endstückes eines mehrlagigen Rohres (37), wobei die Aussparung (R) ausgestaltet ist, dem Anschlussstück im Gebrauch zu ermöglichen die innere Lage (5) und die äußerste Lage (1) des mehrlagigen Rohres (37), das in der Aussparung (R) aufgenommen wurde, zu kontaktieren,
ein Einpassen eines Endstückes des mehrlagigen Rohrs (37) in die Aussparung (R) des Anschlussstückes (35),
ein Zuführen von Wärme sowohl an das Anschlussstück (35) als auch an entweder allein die innere Lage (5) oder sowohl die innere Lage (5) als auch die äußere Lage (1) des mehrlagigen Rohrs (37), das ausreichend ist, um ein lokales Schmelzen an der Grenzfläche zwischen dem Anschlussstück (35) und entweder allein der inneren Lage (5) oder sowohl der inneren Lage (5) als auch der äußeren Lage (1) zu bewirken, **dadurch gekennzeichnet, dass** das Zuführen von Wärme ein Umgeben des zusammengefügten Endstückes des Rohres und des Anschlussstückes (35) mit einer elektrisch leitenden Spule (21) und weiterhin ein Durchführen eines Wechselstroms durch die elektrisch leitende Spule umfasst, die hinreichend ist, um eine gemeinsame Induktion in der Kernlage (3) des mehrlagigen Rohrs (37) zu bewirken.

2. Verfahren nach einem der vorhergehenden Ansprüche, **dadurch gekennzeichnet, dass** die innere Lage (5) und / oder die äußerste Lage (1) des Rohres (37) ein Material aufweisen, das ausgewählt worden ist aus: Polyethylen mit einem verbesserten Temperaturverhalten ("PE-RT") Ethylen-/Oktan-Kopolymere, MDPE, HDPE oder PP.

3. Verfahren nach Anspruch 2, **dadurch gekennzeichnet, dass** das Anschlussstück (35) auch ein Material umfasst, das ausgewählt worden ist aus: Polyethylen mit einem verbesserten Temperaturverhalten ("PE-RT") Ethylen-/Oktan-Kopolymere, MDPE, HDPE oder PP.

4. Verfahren nach einem der vorhergehenden Ansprüche, **dadurch gekennzeichnet, dass** die äußerste Lage (1) eine Dicke in dem Bereich von ungefähr 0,5 mm bis 1,5 mm aufweist.

5. Verfahren nach einem der vorhergehenden Ansprüche, **dadurch gekennzeichnet, dass** die innere Lage (5) eine Dicke in dem Bereich von ungefähr 0,75 mm bis 5,0 mm aufweist.

6. Verfahren nach einem der vorhergehenden Ansprüche, **dadurch gekennzeichnet, dass** die Lage (3) aus Metall oder einem anderen leitenden Material näher zu der äußersten Lage (1) als zu der inneren Lage (5) angeordnet ist.

7. Verfahren nach einem der vorhergehenden Ansprüche, **dadurch gekennzeichnet, dass** die Aussparung (R) des Anschlussstückes (35) eine ringförmige Aussparung ist, die durch eine innere und eine äußere Wand bestimmt ist, wobei die innere Wand eine Dicke von ungefähr 1,5 mm bis 10,0 mm aufweist.

8. Verfahren nach Anspruch 7, **dadurch gekennzeichnet, dass** die äußere Wand des Anschlussstückes (35) eine Dicke von ungefähr 2,0 mm bis ungefähr 5,0 mm aufweist.

9. Verfahren nach einem der vorhergehenden Ansprüche, **dadurch gekennzeichnet, dass** die Lage (3) aus Metall oder einem anderen leitenden Material eine Dicke von ungefähr 0,2 mm bis ungefähr 1,2 mm aufweist.

10. Verfahren nach einem der vorhergehenden Ansprüche, **dadurch gekennzeichnet, dass** die kombinierte Dicke der äußersten (1) und der inneren (5) thermoplastischen Lage größer als die der leitenden Kernlage (3) ist.

11. Verfahren nach einem der vorhergehenden Ansprüche, **dadurch gekennzeichnet, dass** die Kernlage (3) des Rohres Aluminium aufweist.

12. Verfahren nach einem der Ansprüche 1 bis 11, **dadurch gekennzeichnet, dass** die Kernlage (3) des Rohres ein ferromagnetisches Material wie z. B. magnetischen rostfreien Stahl aufweist.

13. Verfahren nach Anspruch 12, **dadurch gekennzeichnet, dass** die Lage aus magnetischen Stahl einen martensitischen rostfreien Stahl, einen ferritischen rostfreien Stahl, einen rostfreien Duplex-Stahl oder einen rostfreien Superduplex-Stahl aufweist.

14. Verfahren nach Anspruch 12 oder 13, **dadurch gekennzeichnet, dass** die Lage (3) aus einem magnetischen rostfreien Stahl eine Dicke von ungefähr 0,2 mm bis 0,8 mm aufweist.

15. Verfahren nach einem der vorhergehenden Ansprüche, **dadurch gekennzeichnet, dass** das Rohr einen oder mehrere Haftvermittler (2, 4) aufweist.

16. Verfahren nach einem der Ansprüche 1 bis 15, **dadurch gekennzeichnet, dass** während des Heizschrittes die Aluminiumgrenzfläche oder die Temperatur des magnetischen rostfreien Stahls auf ungefähr zwischen 200 °C und 260 °C gehalten wird.

17. Verfahren nach einem der vorhergehenden Ansprüche, **dadurch gekennzeichnet, dass** der elektrische Strom für eine Zeitdauer von 10 s bis 300 s zugeführt wird.

18. Verfahren nach einem der vorhergehenden Ansprüche, **dadurch gekennzeichnet, dass** die Arbeitsfrequenz der elektrisch leitenden Spule zwischen ungefähr 40 kHz und 60 kHz beträgt.

19. Verfahren nach einem der vorhergehenden Ansprüche, **dadurch gekennzeichnet, dass** der Strom an die Hauptstromzufuhreinheit mit einer Nennspannung zugeführt wird, die in dem Bereich von 110 V bis 240 V liegt.

20. Verfahren nach einem der Ansprüche 1 bis 19, **dadurch gekennzeichnet, dass** die elektrisch leitende Spule (69) in der Gestalt eines biegsamen Drahtes vorgesehen ist, der um eine zylindrische Klemme (61, 62) gewunden ist, wobei die zylindrische Klemme einen inneren Durchmesser aufweist, der in der Größe angepasst ist, um den Außendurchmesser des Rohres und den Außendurchmesser des Anschlussteils aufzunehmen, wobei es im Eingriff mit dem Außendurchmesser des Rohres (811) und dem Außendurchmesser des Anschlussteiles steht.

21. Verfahren nach Anspruch 20, **dadurch gekennzeichnet, dass** eine oder mehrere Führungen (60) in oder auf der äußeren Oberfläche des Zylinders (61, 62) vorgesehen sind und dass der biegsame Draht (69) in den Führungen aufgenommen und an der Stelle in einer geeigneten Konfiguration gehalten wird.

22. Verfahren nach Anspruch 21, **dadurch gekennzeichnet, dass** die Führung (60) in der Gestalt einer schraubenförmigen Laufrille vorgesehen ist, die in die äußere Oberfläche des Zylinders (61, 62) mit einer geeigneten Tiefe und einem geeigneten Abstand maschinell für die Aufnahme des biegsamen Drahtes (69) eingearbeitet worden ist.

23. Verfahren nach Anspruch 22, **dadurch gekennzeichnet, dass** ferner eine Einspannvorrichtung vorgesehen ist, um den gewendelten biegsamen Draht in seiner gewendelten Konfiguration zu halten.

24. Verfahren nach Anspruch 23, **dadurch gekennzeichnet, dass** die Einspannvorrichtung eine zweite zylindrische Klemme umfasst, die einen inneren Durchmesser aufweist, der ausgestaltet ist, um den äußeren Durchmesser der schraubenförmig mit Rillen versehenen zylindrischen Klemme (61, 62) aufzunehmen.

25. Verfahren nach einem der Ansprüche 1 bis 19, **dadurch gekennzeichnet, dass** die elektrisch leitende Spule (69) in der Gestalt von zwei Spulenteilen (76a, 76b) vorgesehen ist, die einstückig in zwei Anschlussbereiche (71, 72) einer zylindrischen Klemme gebildet sind, wobei die zylindrische Klemme einen inneren Durchmesser aufweist, der in der Größe angepasst ist, um den Außendurchmesser des Rohres und den Außendurchmesser des Anschlussteils aufzunehmen, wobei es im Eingriff um den Außendurchmesser des Rohres und den Außendurchmesser des Anschlussteiles steht, wobei die Anordnung derart ausgestaltet ist, dass wenn die zwei Anschlussbereiche (71, 72) der Klemme zusammengebracht werden, die zwei Spulenteilen (76a, 76b) sich miteinander verbinden und eine einzelne Induktionsspule bilden.

26. Verfahren nach Anspruch 25, **dadurch gekennzeichnet, dass** die zwei Anschlussbereiche (71, 72) über ein Gelenk verbunden sind, das eine Fortführung des Spulendrahtes von einem Anschlussbereich (71, 72) zu dem anderen Anschlussbereich (71, 72) ermöglicht.

27. Verfahren nach Anspruch 1, **dadurch gekennzeichnet, dass** der Schritt des Heizens ein direktes Zuführen von Strom an die Kernlage (3) umfasst.

28. Verfahren nach einem der vorgehenden Ansprüche, **dadurch gekennzeichnet, dass** das Anschlussstück (35) ein gegossenes Stück aus einem thermoplastischen Material aufweist, das mindestens ein offenes Ende und eine ringförmige Aussparung (36a, 36b) aufweist, die in dem mindestens einem offenen Ende vorgesehen ist, wobei die Aussparung ausgestaltet ist, das mehrlagige Rohr (37) aufzunehmen.

29. Verfahren nach Anspruch 1, **dadurch gekennzeichnet, dass** der Schritt des Zuführens der Wärme ein Bereitstellen von Aufheizmitteln (51, 52), die ausgestaltet sind, die Aussparung (R) des Anschlussstückes und das Endstück des Rohres zu ergänzen, ein Anordnen der Mittel in die Aussparung des Anschlussstückes und über die Endstücke des Rohres, die sich auf eine Weise über die freiliegende Oberfläche der inneren Lage (5) und / oder der äußeren Lage (1) des Rohres erstrecken, und ein Aufheizen der Aufheizmittel (51, 52) auf eine Temperatur bei der oder über der Schmelztemperatur des thermoplastischen Materials der inneren und der äußeren Schicht und des Anschlussstückes umfasst.

30. Verfahren nach Anspruch 29, **dadurch gekennzeichnet, dass** die Aufheizmittel (51, 52) in situ aufgeheizt werden.

31. Verfahren nach Anspruch 29, **dadurch gekennzeichnet, dass** die Aufheizmittel (51, 52) vor dem Kontakt mit dem Anschlussstück und dem Endstück des Rohres aufgeheizt werden.

32. Verfahren nach Anspruch 1, **dadurch gekennzeichnet, dass** der Schritt des Zuführens der Wärme ein Verwenden eines Schweißverfahrens umfasst, das die sich berührenden thermoplastischen Oberflächen des mehrlagigen Rohres und des Anschlussstückes schmilzt.

33. Verfahren nach Anspruch 32, **dadurch gekennzeichnet, dass** das Schweißverfahren aus einem Rotationsschweißen oder einem Ultraschallschweißen ausgewählt wird.

34. Kombination von einem oder mehreren mehrlagigen Rohren (37) und einem Anschlussstück (37), die mit einem Verfahren nach einem der vorgehenden Ansprüche verbunden worden sind.

35. Kombination nach Anspruch 34, wobei das Anschlussstück (35) einen Körper aus Kunststoff in einer einstückigen Konfiguration aufweist und mindestens eine ringförmige Aussparung (36a, 36b) umfasst, die ausgestaltet ist, ein Endstück des Rohres aufzunehmen, **dadurch gekennzeichnet, dass** der Abschnitt des Anschlussstückes, der die Aussparung bestimmt, einen J-förmigen Querschnitt aufweist, und dass, wenn ein Rohr in der Aussparung aufgenommen ist, die Aufrechtstehende des J sich parallel zu und in Kontakt mit einer freiliegenden Oberfläche von einem der inneren und der äußeren Schicht des Rohres befindet und der Haken des J sich über ein Ende von allen Lagen des Rohres und auf die freiliegende Oberfläche der anderen von der inneren und der äußeren Lage des Rohres erstreckt.

36. Kombination nach Anspruch 34, wobei das Anschlussstück (35) einen Körper aus Kunststoff in einer einstückigen Konfiguration aufweist und mindestens eine ringförmige Aussparung (36a, 36b) umfasst, die ausgestaltet ist, ein Endstück des Rohres aufzunehmen, **dadurch gekennzeichnet, dass** der Abschnitt des Anschlussstückes, der die Aussparung bestimmt, einen L-förmigen Querschnitt aufweist, und dass, wenn ein Rohr in der Aussparung aufgenommen ist, die Aufrechtstehende des L sich parallel zu und in Kontakt mit einer freiliegenden Oberfläche von einem der inneren und der äußeren Schicht des Rohres befindet und die Horizontale des L sich über ein Ende von allen Lagen des Rohres erstreckt.

37. Kombination nach Anspruch 35 oder 36, **dadurch gekennzeichnet, dass** das Anschlussstück ausgewählt wird aus: einer T-Verzweigung, einem Kniestück, einem 45°-Kniestück, einem Kreuzstück, einem Ypsilonstück oder einem Endstück.

38. Verfahren nach einem der Ansprüche 1 bis 29, **dadurch gekennzeichnet, dass** ein Wechselstrom an die elektrisch leitende Spule (21) mittels eines Induktionsschmelzgerätes zugeführt wird, wobei das Induktionsschmelzgerät einen Transformator (801) aufweist, der mit einer Wechselstromzufuhr als eine Eingabe verbunden werden kann und der ausgestaltet ist, eine transformierte Zufuhr über ein Stromkabel (803) an eine Stromzufuhreinheit (804) des Induktionsschweißens auszugeben, wobei die Stromzufuhreinheit ein Bedienfeld (805), das ausgestaltet ist, einem Anwender zu ermöglichen, spezifische Charakteristiken der Stromzufuhreinheit des Induktionsschweißens auszuwählen, und Mittel (807, 808, 809) umfasst, um den Wechselstrom und die entsprechende Wechselspannung mit der optimalen Frequenz an die elektrisch leitende Spule auszugeben, um die elektrisch leitende Spule mit der gewünschten Rate auf die gewünschte Temperatur aufzuheizen.

39. Verfahren nach Anspruch 38, **dadurch gekennzeichnet, dass** die Zufuhr mit den ausgewählten Charakteristiken über ein Fernabgabeschaltgehäuse (808) ausgegeben wird, wobei das Fernabgabeschaltgehäuse ausgestaltet ist, beliebige Verluste oder Verzerrungen in der Zufuhr zu kompensieren, die während der Übertragung der Zufuhr an die Spule auftreten.

## Revendications

1. Procédé de raccordement d'un tuyau en plastique multicouche (37) à un raccord (35) le tuyau multicouche comprenant au moins une couche extérieure (1) et une couche intérieure (5) en matériau thermoplastique et une couche formant âme (3) en métal ou autre matériau conducteur dont l'épaisseur est inférieure à 2 mm, et le tuyau ayant un diamètre extérieur allant de 20 mm à 110 mm, le raccord (35) comprenant une pièce unitaire en matériau thermoplastique et le raccord (35) comprenant un matériau thermoplastique, le procédé comprenant les étapes consistant à :
fournir un raccord (35) comprenant un renfoncement (R) pour recevoir une extrémité d'un tuyau multicouche (37), le renfoncement (R) étant configuré pour permettre, à l'usage, au raccord d'entrer en contact avec les couches intérieure (5) et la plus extérieure (1) d'un tuyau multicouche (37) reçu dans le renfoncement (R) ;
adapter une extrémité du tuyau multicouche (37) dans le renfoncement (R) du raccord (35) ;
appliquer au raccord (35) et soit à la seule couche intérieure (5) soit aux deux couches intérieure (5) et extérieure (1) du tuyau multicouche (37) assez d'énergie thermique pour provoquer une fusion locale à l'interface entre le raccord (35) et soit la seule couche intérieure (5) soit les deux couches, intérieure (5) et la plus extérieure (1), **caractérisé en ce que** l'application d'énergie thermique implique l'étape consistant à entourer l'extrémité de tuyau et le raccord (35) assemblés d'une bobine électriquement conductrice (21) ; et **caractérisé en outre par** l'étape consistant à faire circuler à travers la bobine électriquement conductrice (21) un courant alternatif suffisant à provoquer une induction mutuelle dans la couche formant âme (3) du tuyau multicouche.

2. Procédé selon la revendication précédente, **caractérisé en ce que** les couches intérieure et/ou la plus extérieure (1, 5) du tuyau (37) comprennent un matériau choisi dans le groupe comprenant le polyéthylène à haute résistance thermique (« PE-RT »), des copolymères éthylène/octane, le MDPE, le HDPE ou le PP.

3. Procédé selon la revendication 2, **caractérisé en ce que** le raccord (35) comprend en outre un matériau choisi dans le groupe comprenant le polyéthylène à haute résistance thermique (« PE-RT »), des copolymères éthylène/octane, le MDPE, le HDPE ou le PP.

4. Procédé selon l'une quelconque des revendications précédentes, **caractérisé en ce que** la couche la plus extérieure (1) a une épaisseur allant d'environ 0,5 mm à environ 1,5 mm.

5. Procédé selon l'une quelconque des revendications précédentes, **caractérisé en ce que** la couche intérieure (5) a une épaisseur allant d'environ 0,75 mm à 5,0 mm.

6. Procédé selon l'une quelconque des revendications précédentes, **caractérisé en ce que** la couche (3) en métal ou autre matériau conducteur est positionnée plus à proximité de la couche la plus extérieure (1) que de la couche intérieure (5).

7. Procédé selon l'une quelconque des revendications précédentes, **caractérisé en ce que** le renfoncement (R) du raccord (35) est un renfoncement annulaire défini par une paroi extérieure et une paroi intérieure, et **en ce que** la paroi intérieure a une épaisseur allant d'environ 1,5 mm à 10 mm.

8. Procédé selon la revendication 7, **caractérisé en ce que** la paroi extérieure du raccord (35) a une épaisseur allant d'environ 2,0 mm à environ 5,0 mm.

9. Procédé selon l'une quelconque des revendications précédentes **caractérisé en ce que** la couche (3) en métal ou autre matériau conducteur a une épaisseur allant d'environ 0,2 mm à 1,2 mm.

10. Procédé selon l'une quelconque des revendications précédentes, **caractérisé en ce que** l'épaisseur combinée des couches thermoplastiques la plus extérieure (1) et intérieure (5) est supérieure à celle de la couche formant âme (3) conductrice.

11. Procédé selon l'une quelconque des revendications précédentes, **caractérisé en ce que** la couche formant âme (3) du tuyau comprend de l'aluminium.

12. Procédé selon les revendications 1 à 11, **caractérisé en ce que** la couche formant âme (3) du tuyau comprend un matériau ferromagnétique tel que l'acier inoxydable magnétique.

13. Procédé selon la revendication 12, **caractérisé en ce que** la couche en acier inoxydable magnétique comprend de l'acier inoxydable martensitique, de l'acier inoxydable ferritique, de l'acier inoxydable duplex, ou de l'acier inoxydable super duplex.

14. Procédé selon la revendication 12 ou 13, **caractérisé en ce que** la couche (3) d'acier inoxydable magnétique a une épaisseur allant d'environ 0,2 mm à 0,8 mm.

15. Procédé selon l'une quelconque des revendications précédentes, **caractérisé en ce que** le tuyau comprend une ou plusieurs couches de liaison (2, 4).

16. Procédé selon l'une quelconque des revendications 1 à 15, **caractérisé en ce que** pendant l'étape de chauffage, la température de l'interface en aluminium ou en acier inoxydable magnétique est maintenue entre environ 200→C et 260→C.

17. Procédé selon l'une quelconque des revendications précédentes, **caractérisé en ce que** le courant électrique est appliqué pendant un laps de temps allant de 10 secondes à 300 secondes.

18. Procédé selon l'une quelconque des revendications précédentes, **caractérisé en ce que** la fréquence opérationnelle de la bobine électriquement conductrice va d'environ 40 kHz à 60 kHz.

19. Procédé selon l'une quelconque des revendications précédentes, **caractérisé en ce que** l'électricité est fournie au bloc d'alimentation principal d'induction à une tension nominale allant de 110V à 240V.

20. Procédé selon l'une quelconque des revendications 1 à 19, **caractérisé en ce que** la bobine électriquement conductrice (69) est configurée en forme de fil souple enroulé autour d'un collier de serrage cylindrique (61, 62), le collier de serrage cylindrique ayant un diamètre intérieur dimensionné de sorte à recevoir le diamètre extérieur du tuyau et le diamètre extérieur du raccord, engagé autour du diamètre extérieur du tuyau (811) et du diamètre extérieur du raccord.

21. Procédé selon la revendication 20, **caractérisé en ce qu'**un ou plusieurs guide(s) (60) est/sont positionné(s) dans ou sur la surface extérieure du cylindre (61, 62) et le fil souple (69) est reçu et maintenu en place dans les guides selon une configuration appropriée.

22. Procédé selon la revendication 21, **caractérisé en ce que** le guide (6) est configuré en forme de rainure hélicoïdale usinée dans la surface extérieure du cylindre (61, 62) à une profondeur appropriée et avec un pas approprié pour recevoir le fil souple (69).

23. Procédé selon la revendication 22, **caractérisé en ce qu'**un dispositif de retenue est en outre prévu, pour retenir le fil souple enroulé dans sa configuration enroulée.

24. Procédé selon la revendication 23, **caractérisé en ce que** le dispositif de retenue est un second collier de serrage cylindrique ayant un diamètre intérieur configuré pour recevoir le diamètre extérieur du collier de serrage cylindrique (61, 62) à rainure hélicoïdale.

25. Procédé selon l'une quelconque des revendications 1 à 19, **caractérisé en ce que** la bobine électriquement conductrice est fournie sous la forme de deux parties de bobine (76a, 76b) formées en une seule pièce dans deux parties conjuguées (71, 72) d'un collier de serrage cylindrique, le collier de serrage cylindrique ayant un diamètre intérieur dimensionné de sorte à recevoir le diamètre extérieur du tuyau et le diamètre extérieur du raccord, étant engagé autour du diamètre extérieur du tuyau et du diamètre extérieur du raccord, l'agencement étant tel que quand les deux parties conjuguées (71, 72) du collier de serrage sont réunies, les deux parties de bobine (76a, 76b) sont interconnectées pour produire une seule bobine d'induction.

26. Procédé selon la revendication 25, **caractérisé en ce que** les deux parties conjuguées (71, 72) sont raccordées par l'intermédiaire d'une articulation qui permet la continuation du fil de bobine d'une partie conjuguée (71, 72) à l'autre (71, 72).

27. Procédé selon la revendication 1, **caractérisé en ce que** l'étape de chauffage implique l'application du courant directement sur la couche formant âme (3).

28. Procédé selon l'une quelconque des revendications précédentes, **caractérisé en ce que** le raccord (35) comprend une pièce moulée en matériau thermoplastique ayant au moins une extrémité ouverte et un renfoncement annulaire (36a, 36b) formé dans l'au moins une extrémité ouverte, le renfoncement étant configuré pour recevoir le tuyau multicouche (37).

29. Procédé selon la revendication 1, **caractérisé en ce que** l'étape consistant à appliquer de l'énergie thermique implique l'apport d'outils chauffants (51, 52) façonnés de sorte à compléter le renfoncement (R) du raccord et l'extrémité du tuyau, placer les outils dans le renfoncement du raccord et sur les extrémités du tuyau de manière à ce qu'ils s'étendent sur une certaine distance le long des surfaces exposées des couches de tuyau intérieure (5) et/ou extérieure (1), et chauffer les outils chauffants (51, 52) à une température supérieure ou égale à la température de fusion du matériau thermoplastique des couches intérieure et extérieure et du raccord.

30. Procédé selon la revendication 29, **caractérisé en ce que** les outils chauffants (51, 52) sont chauffés in situ.

31. Procédé selon la revendication 29, **caractérisé en ce que** les outils chauffants (51, 52) sont chauffés avant le contact avec le raccord et l'extrémité de tuyau.

32. Procédé selon la revendication 1, **caractérisé en ce que** l'étape d'application de chaleur implique l'utilisation d'une technique de soudage qui fait fondre les surfaces thermoplastiques en contact du tuyau multicouche et du raccord.

33. Procédé selon la revendication 32, **caractérisé en ce que** la technique de soudage est choisie entre le soudage par friction et le soudage par ultrasons.

34. Combinaison d'un ou de plusieurs tuyaux multicouches (37) et d'un raccord (35) raccordés selon le procédé selon l'une quelconque des revendications précédentes.

35. Combinaison selon la revendication 34, dans laquelle le raccord (35) a un corps en plastique de configuration unitaire et comprenant au moins un renfoncement annulaire (36a, 36b) configuré pour recevoir une extrémité de tuyau, **caractérisée en ce que** la section du raccord définissant le renfoncement présente une coupe transversale en forme de J, quand un tuyau est reçu dans le renfoncement, la barre du J étant en contact avec et parallèle à une surface exposée d'une des couches intérieure et extérieure du tuyau, et le crochet du J s'étendant à travers une extrémité de toutes les couches du tuyau et sur la surface exposée de l'autre des couches intérieure et extérieure du tuyau.

36. Combinaison selon la revendication 34, dans laquelle le raccord (35) a un corps en plastique de configuration unitaire et comprenant au moins un renfoncement annulaire (36a, 36b) configuré pour recevoir une extrémité de tuyau, **caractérisée en ce que** la section du raccord définissant le renfoncement présente une coupe transversale en forme de L, la barre du L, quand un tuyau est reçu dans le renfoncement, étant en contact avec et parallèle à une surface exposée d'une des couches intérieure et extérieure du tuyau, et le pied du L s'étendant à travers une extrémité de toutes les couches du tuyau.

37. Combinaison selon l'une quelconque des revendications 35 à 36, **caractérisée en ce que** le couplage est choisi entre : un joint en T, un joint coudé, un joint coudé à 45→, une pièce transversale, une pièce en Y ou une pièce d'extrémité.

38. Procédé selon l'une quelconque des revendications 1 à 29, **caractérisé en ce qu'**un courant alternatif est fourni à la bobine électriquement conductrice (21) au moyen d'un équipement de soudage par induction comprenant un transformateur (801) apte à être raccordé à un bloc d'alimentation CA à l'entrée et configuré pour fournir en sortie une énergie transformée via un câble d'alimentation (803) à un bloc d'alimentation de soudage par induction (804), le bloc d'alimentation comprenant un tableau de commande (805) configuré pour permettre à l'opérateur de choisir des caractéristiques spécifiques du bloc d'alimentation de soudage par induction, et des moyens (807, 808, 809) destinés à fournir en sortie à la bobine électriquement conductrice le courant alternatif et la tension alternative correspondante, à la fréquence optimale, afin de chauffer la bobine électriquement conductrice à la vitesse souhaitée et à la température souhaitée.

39. Procédé selon la revendication 38, **caractérisé en ce que** l'alimentation électrique avec les caractéristiques sélectionnées est fournie via un boîtier de circuit de sortie distant (808), le boîtier de circuit de sortie distant étant configuré pour compenser toute perte ou distorsion de l'alimentation électrique subie pendant la transmission de l'alimentation électrique à la bobine.
